(19) Europäisches Patentamt
European Patent Office
Office européen des brevets

(11) **EP 2 113 442 A1**

(12) **DEMANDE DE BREVET EUROPEEN**

(43) Date de publication:
**04.11.2009 Bulletin 2009/45**

(51) Int Cl.:
**B62D 5/00** (2006.01)   **B62D 6/00** (2006.01)
**B62D 103/00** (2006.01)

(21) Numéro de dépôt: **09305334.6**

(22) Date de dépôt: **20.04.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **29.04.2008 FR 0802407**

(71) Demandeur: **Renault s.a.s.**
**92100 Boulogne-Billancourt (FR)**

(72) Inventeur: **Lorimier, Lionel**
**78180, Montigny Le Bretonneux (FR)**

(54) **Procédé de fonctionnement d'un système de direction active d'un véhicule automobile**

(57)     Procédé de fonctionnement d'un système (10) de direction d'un véhicule comprenant un organe de commande de direction pour braquer des roues directrices du véhicule dans un premier sens ou dans un deuxième sens de braquage, le procédé comprenant :
- un premier mode de fonctionnement dans lequel on applique une première loi de démultiplication, et
- dans une phase de freinage du véhicule automobile, un deuxième mode de fonctionnement dans lequel on applique une deuxième loi de démultiplication,

**caractérisé en ce que**, quel que soit le sens de braquage et tout paramètre égal par ailleurs, une variation de position de l'organe de commande de direction entraîne, dans le deuxième mode de fonctionnement, une variation de position de braquage des roues strictement inférieure à celle entraînée dans le premier mode de fonctionnement par une même variation de position de l'organe de commande de direction.

Fig.6

**Description**

La présente invention concerne un procédé de fonctionnement d'un système de direction d'un véhicule automobile. Elle concerne aussi un support de données comprenant des moyens logiciels de mise en oeuvre d'un tel procédé, un système de direction fonctionnant conformément au procédé et un véhicule automobile comprenant un tel système de direction.

Des systèmes actifs sont de plus en plus souvent intégrés aux véhicules automobiles afin d'en améliorer le comportement dans des buts de confort et/ou de sécurité. En particulier, afin d'améliorer le confort, l'agrément de conduite et la sécurité active dans certaines situations de conduite, il est connu d'intégrer à un véhicule un système de direction active. Un système de direction active, qu'il s'agisse d'une direction active sur les roues avant et/ou sur les roues arrière permet notamment de modifier le comportement dynamique et statique du véhicule en réponse à des sollicitations du conducteur au niveau du volant mais également selon la vitesse du véhicule ou d'autres informations sur l'état du véhicule. Quel que soit le niveau de finesse des stratégies de commande d'un tel système de direction, celles-ci permettent au conducteur de bénéficier d'une démultiplication variable en fonction notamment de la vitesse. Par démultiplication, on entend le rapport d'une position de l'organe de direction (comme un angle d'un volant de direction) sur l'angle de braquage des roues correspondant. Dans le cas de la présence d'un système de braquage des roues arrière, on parle de démultiplication équivalente par référence à un véhicule non équipé et produisant le même comportement en lacet.

A basse vitesse, la direction est dite plus directe afin de privilégier la maniabilité du véhicule : il suffit de tourner peu le volant pour se maintenir sur des trajectoires à faible rayon de courbure alors qu'à haute vitesse on privilégie la stabilité du véhicule avec une direction moins directe : pour faire tourner le véhicule d'une même quantité, il faut tourner davantage le volant. Les choix des valeurs de démultiplication sont liés au véhicule mais les tendances sont identiques quels que soient les véhicules. En particulier, la transition entre les démultiplications doit rester progressive et naturelle pour le conducteur afin de ne pas le surprendre.

La stratégie évoquée précédemment a pour conséquence que, dans les phases d'accélération, le fait de changer la démultiplication vers une démultiplication moins directe impose au conducteur de braquer davantage pour suivre la même trajectoire, ce qui représente un comportement sécuritaire. Par contre, la stratégie évoquée précédemment a aussi pour conséquence que dans les phases de décélération, et en particulier dans les phases de freinage appuyé en virage, le conducteur peut être surpris par un véhicule plongeant subitement vers l'intérieur du virage s'il ne modifie pas la position du volant, ou alors bénéficier d'une réponse trop vive de son véhicule par rapport à la démultiplication à laquelle il s'attendait, le conducteur ayant en mémoire la démultiplication utilisée avant le début du freinage. Un tel comportement du véhicule peut être dangereux.

On connaît de nombreuses stratégies de pilotage de la démultiplication d'un système de direction. Cette démultiplication varie par ailleurs légèrement naturellement avec la position du volant de par la géométrie des trains mais cela de manière peu significative en comparaison avec les stratégies de pilotage de la démultiplication.

On connaît par exemple de la demande EP 0 317 390 A1 un dispositif de pilotage passif de la démultiplication.

On connaît également des dispositifs de pilotage de la démultiplication, c'est-à-dire des dispositifs utilisant au moins un actionneur piloté par un dispositif électronique.

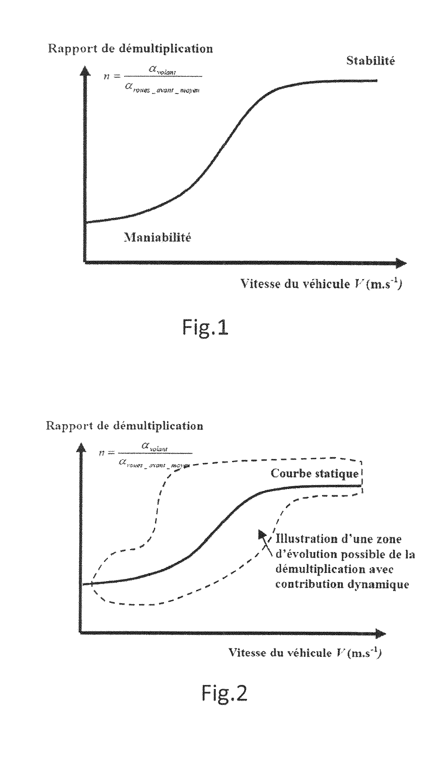

Les figures 1 à 5 illustrent les stratégies connues de pilotage de la démultiplication. Ces stratégies peuvent être divisées en deux classes :

- les stratégies dites statiques qui correspondent à une variation du rapport de démultiplication en fonction de la vitesse du véhicule et éventuellement de l'angle volant comme illustrées sur la figure 1,
- les stratégies dites dynamiques qui, en plus d'une contribution statique, prennent en compte des informations de l'état dynamique du véhicule telles que la vitesse de lacet, l'accélération latérale, l'angle de dérive du véhicule ou encore l'accélération ou le freinage appliqué afin d'adapter la démultiplication (contribution dynamique).

Cette dernière classe conduit, comme représenté à la figure 2, à avoir une démultiplication qui peut prendre des valeurs différentes de celles définies par la courbe de démultiplication statique à l'intérieure d'une zone délimitée par des traits pointillés. Certaines stratégies n'autorisent d'ailleurs des fonctionnements dynamiques que dans des plages de vitesses spécifiques.

Qu'elles soient statiques ou dynamiques, on peut en outre distinguer des stratégies visant à améliorer le plaisir de conduite (passage en courbe, typage de la réponse en vitesse de lacet, typage de la réponse en accélération latérale, maniabilité à basse vitesse...) et d'autres visant la sécurité active comme dans la demande US 2005/273235.

De nombreux brevets exposent des stratégies de commande visant à améliorer le plaisir de conduite selon les principes énoncés ci-dessus. A titre illustratif, on peut citer la demande US 2005/0043874.

Le principe généralement retenu, comme illustré sur les figures précédentes, est le suivant : à basse vitesse, la direction est dite plus directe afin de privilégier la maniabilité du véhicule : il suffit de tourner peu le volant pour maintenir le véhiculesur des trajectoires à faible rayon de courbure alors qu'à haute vitesse on privilégie la stabilité du véhicule avec une direction moins directe : pour faire tourner le véhicule d'une même quantité, il faut tourner davantage le volant.

Dans la demande US 2005/273235, outre des fonctionnalités de plaisir de conduite, est présentée une fonctionnalité de sécurité active qui consiste en l'adaptation de la démultiplication par l'intermédiaire du système actif de braquage en fonction d'une variable caractéristique de sous virage. Plus cette variable caractéristique de sous virage prend des valeurs élevées, plus la demultiplication devient grande, autrement dit plus petit devient l'angle de braquage des roues en comparaison à l'angle du volant. En outre, cette variable caractéristique est paramétrée par la vitesse d'évolution du sous virage afin d'en amplifier l'influence. Ainsi, par l'intermédiaire d'une variation de démultiplication, on tend à réduire le braquage effectif des roues par rapport au volant lorsque le véhicule se trouve en situation de sous virage. Cette solution ne permet cependant pas de résoudre le problème identifié dans le cadre de la présente invention puisqu'elle nécessite que le véhicule se retrouve dans une situation de sous virage et, dans ce cas, elle consiste à réduire l'angle de braquage des roues avant pour désaturer le train avant et sortir ainsi de la situation de sous virage.

Le brevet US 6,302,441 décit un procédé de fonctionnement d'un système de direction permettant un ajustement de la démultiplication dans les phases d'accélération et freinage en virage pour des critères de plaisir de conduite (entrée de virage / sortie de virage). La démultiplication est changée par l'intermédiaire d'une variable $\alpha$ qui dépend de la phase dans laquelle on se trouve et dont le signe (+/-) dépend de l'ajout d'angle volant ou du retrait d'angle volant vers la position neutre (ligne droite). A cela s'ajoute un coefficient multiplicatif $\beta$ qui dépend de l'intensité du freinage ou de l'accélération (plus elle est intense, plus le coefficient multiplicatif est grand) et de la vitesse du véhicule et de la vitesse volant.

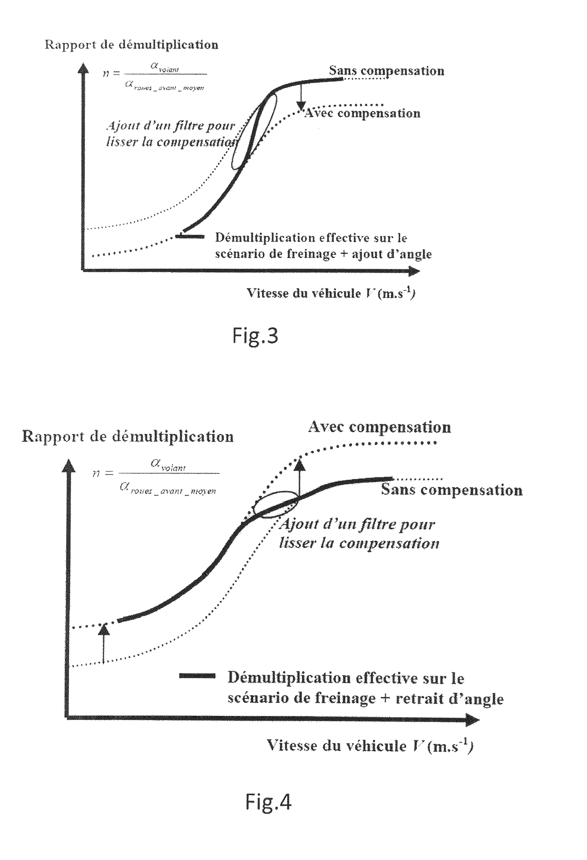

Dans le cas d'un freinage, en appliquant les stratégies énoncées dans ce brevet US 6,302,441, on obtient les démultiplications de la figure 3 dans le cas d'un ajout d'angle du conducteur et de la figure 4 dans le cas d'un retrait d'angle de la part du conducteur. Il est possible de filtrer la contribution dynamique par un filtre passe-bas afin d'avoir une transition douce entre les démultiplications.

Dans le cas où le conducteur ne change pas son angle volant ou peu (seuil dépendant de la vitesse), la démultiplication suit la courbe de base avec la compensation précédente (pas de mise à jour de la compensation). En particulier, cela signifie que la démultiplication continue à évoluer avec la vitesse même si la compensation reste elle constante par rapport au pas de calcul précédent.

Comme on le constate sur la courbe de démultiplication effective sur la figure 3, l'ajout de la compensation selon le brevet US 6,302,441 en virage en plus de la stratégie de variation de la démultiplication avec la vitesse entraîne une diminution encore plus conséquente de la démultiplication ce qui tend à rendre la direction très directe. Ceci amplifie le problème évoqué précédemment.

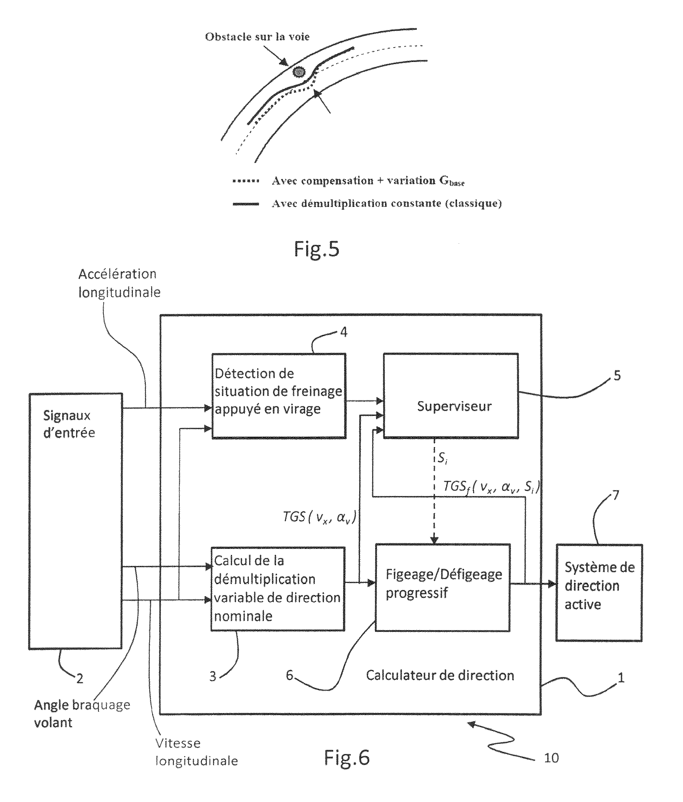

Lors d'un freinage soudain en virage avec une situation d'évitement allant vers l'intérieur du virage, l'ajout d'angle selon le brevet US 6,302,441 est très accompagné, d'autant plus que le freinage est appuyé, ce qui peut être surprenant pour le conducteur qui fournit un angle réflexe pour éviter l'obstacle. La variation de démultiplication peut s'avérer dangereuse surtout si un véhicule arrive en face car elle tend à écarter la trajectoire pour une même manoeuvre au volant. L'écart de trajectoire généré par une telle stratégie est illustré sur la figure 5, la trajectoire en traits pointillés correspondant à celle d'un véhicule comprenant un système de direction fonctionnant selon le principe du brevet US 6,302,441.

Lors d'un freinage soudain en virage avec une situation d'évitement allant vers l'extérieur du virage, pour une vitesse donnée, la démultiplication est soudainement plus basse jusqu'au retour vers le point zéro alors qu'elle redevient plus importante dès que le volant passe le point zéro pour provoquer une prise de lacet contraire et éviter l'obstacle. Compte tenu des variations de vitesse, la démultiplication réelle n'est pas très bien connue, mais lors du passage du point zéro, le conducteur se retrouve d'un coup avec une direction très directe qui peut là aussi le surprendre c'est-à-dire conduire à une mauvaise réponse du véhicule par rapport à sa volonté.

Lors d'un freinage soudain en virage sans situation d'évitement, la variation de démultiplication selon le brevet US 6,302,441, qui devient plus directe, provoque, à angle de volant constant, un accroissement de l'angle de braquage des roues avant, ce qui a tendance à faire davantage rentrer le véhicule dans le virage (comportement survireur). Le conducteur doit donc modifier l'angle du volant (le réduire) pour que son véhicule conserve sa trajectoire. Ce comportement n'est, là encore, pas sécuritaire.

Des conclusions similaires peuvent être tirées lors d'un freinage en ligne droite avec ensuite une manoeuvre d'évitement.

Dans le cas où le freinage provoque une perte de contrôle du véhicule, par exemple un cas de survirage dû au délestage du train arrière ou un sous virage dû à un freinage trop appuyé provoquant une saturation du train avant : Si le véhicule est équipé d'un système de suivi de trajectoire, il est important là aussi de rester cohérent avec la démultiplication. En effet, le volant devient un générateur de consigne et la démultiplication est prise en compte par le système de suivi de trajectoire pour interpréter la volonté du conducteur. Le problème identifié est que cette variation de démultiplication peut surprendre le conducteur et, par conséquent, être peu sécuritaire car elle amplifie les actions que le conducteur a l'habitude d'appliquer au volant dans des situations où les réactions instinctives du conducteur prévalent par rapport aux réactions réfléchies (le freinage appuyé impliquant un changement rapide de situation).

Le but de la présente invention est de fournir un procédé de fonctionnement d'un système de direction obviant aux inconvénients identifiés précédemment et permettant d'améliorer les procédés de fonctionnement connus de l'art antérieur. En particulier, l'invention propose un procédé de fonctionnement d'un système de direction permettant de rendre le comportement du véhicule plus intuitif pour le conducteur et, ainsi, de rendre son comportement plus sûr dans des situations potentiellement dangereuses. L'invention concerne aussi un système de direction mettant en oeuvre un tel procédé de commande.

Le procédé selon l'invention régit le fonctionnement d'un système de direction d'un véhicule automobile comprenant un organe de commande de direction pour braquer des roues directrices du véhicule automobile dans un premier sens ou dans un deuxième sens de braquage. Le procédé comprend :

- un premier mode de fonctionnement dans lequel on applique une première démultiplication entre la position de braquage des roues directrices du véhicule automobile et la position de l'organe de commande de direction, la première démultiplication étant variable en fonction de la vitesse du véhicule automobile, et

- dans une phase de freinage du véhicule automobile, un deuxième mode de fonctionnement dans lequel on applique une deuxième démultiplication entre la position de braquage des roues directrices du véhicule automobile et la position de l'organe de commande de direction.

Il est **caractérisé en ce que,** pour au moins un intervalle de vitesses prédéfini, quel que soit le sens de braquage et tout paramètre égal par ailleurs, une variation de position de l'organe de commande de direction entraîne, dans le deuxième mode de fonctionnement, une variation de position de braquage des roues strictement inférieure à celle entraînée dans le premier mode de fonctionnement par une même variation de position de l'organe de commande de direction.

La deuxième démultiplication peut être indépendante de la vitesse du véhicule automobile.

Lors d'une transition du premier mode de fonctionnement au deuxième mode de fonctionnement, la dernière valeur de la première démultiplication peut être égale à la première valeur de la deuxième démultiplication.

Le procédé de fonctionnement peut basculer dans le deuxième mode de fonctionnement dès franchissement à la baisse d'un premier seuil d'accélération.

Le procédé de fonctionnement peut comprendre un troisième mode de fonctionnement assurant une transition entre le deuxième mode de fonctionnement et le premier mode de fonctionnement et dans lequel on applique une troisième démultiplication entre la position de braquage des roues directrices du véhicule automobile et la position de l'organe de commande de direction.

Dans le troisième mode de fonctionnement, lorsque la valeur de position de l'organe de commande est inférieure à un deuxième seuil, l'évolution de la valeur de la troisième démultiplication peut être fixée par un paramètre de réglage constant ou fonction de la valeur de la troisième démultiplication.

Dans le troisième mode de fonctionnement, lorsque la valeur de position de l'organe de commande est supérieure ou égale à un deuxième seuil, l'évolution de la valeur de la troisième démultiplication peut être dépendante des actions exercées par le conducteur sur l'organe de commande de direction.

La troisième démultiplication peut ne pas être modifiée sans modification de la position de l'organe de commande, lorsque la vitesse du véhicule est supérieure à un troisième seuil.

En cas de maintien de la position de l'organe de commande de direction, la troisième démultiplication peut être modifiée de sorte à ce que la vitesse de braquage des roues ne dépasse pas un quatrième seuil.

Le quatrième seuil peut être fonction de la vitesse du véhicule automobile.

Le procédé de fonctionnement peut passer du deuxième mode de fonctionnement au troisième mode de fonctionnement dès franchissement à la hausse d'un cinquième seuil d'accélération.

Le support de données selon l'invention comprend des moyens logiciels de mise en oeuvre du procédé de fonctionnement défini précédemment.

Selon l'invention, le système de direction d'un véhicule automobile comprend un organe de commande de direction pour braquer des roues directrices du véhicule automobile dans un premier sens ou dans un deuxième sens de braquage. Il est **caractérisé en ce qu**'il comprend des moyens matériels et/ou logiciels de mise en oeuvre du procédé de fonctionnement défini précédemment.

Les moyens matériels et/ou logiciels de mise en oeuvre du procédé de fonctionnement peuvent comprendre des moyens de calcul de la démultiplication du système de direction et un moyen de détection d'une phase de freinage du véhicule activant un moyen de modification de la démultiplication calculée au niveau des moyens de calcul de la démultiplication du système de direction.

Le véhicule automobile selon l'invention comprend des roues avant et/ou des roues arrière directrices actionnées par un système de direction défini précédemment.

Le dessin annexé représente, à titre d'exemple, un mode d'exécution du procédé de fonctionnement d'un système de direction selon l'invention.

Les figures 1 à 4 sont des schémas illustrant les évolutions de la démultiplication de différents systèmes de direction connus de l'art antérieur, en fonction de la vitesse du véhicule qu'ils équipent.

La figure 5 est un schéma illustrant les effets d'un système de direction connu de l'art antérieur sur la trajectoire d'un véhicule qui en est équipé.

La figure 6 est un schéma d'un mode de réalisation d'un système de direction selon l'invention.

La figure 7 est un schéma d'un mode d'exécution d'un procédé de fonctionnement d'un système de direction selon l'invention.

La figure 8 est un schéma liant différentes variables utilisées dans un mode de fonctionnement particulier du mode de réalisation de système de direction évoqué précédemment.

Un mode de réalisation du système 10 de direction selon l'invention, représenté à la figure 6 comprend notamment un calculateur 1 pilotant un dispositif 7 de direction active comprenant un actionneur de braquage des roues directrices avant et/ou arrière du véhicule automobile, l'actionneur étant par exemple un actionneur électrique. Le système de direction est par exemple du type découplé (c'est-à-dire sans liaison mécanique directe en fonctionnement nominal entre l'organe de commande de direction et les roues directrices du véhicule) ou du type non découplé (c'est-à-dire avec liaison mécanique directe en fonctionnement nominal entre l'organe de commande de direction et les roues directrices du véhicule).

Le calculateur peut également être utilisé pour contrôler d'autres systèmes que le dispositif de direction. Le calculateur 1 est attaqué par différents signaux d'entrées, notamment :

- un signal d'accélération longitudinale du véhicule automobile (noté $\gamma_L$), l'accélération étant mesurée par un capteur ou estimée depuis d'autres mesures telles que la mesure des vitesses des roues,
- un signal de position de l'organe de commande de direction (en l'espèce un signal d'angle de position du volant de direction noté $\alpha_v$), la position étant mesurée par un capteur ou estimée à partir d'autres grandeurs telles que l'angle de braquage des roues et
- un signal de vitesse longitudinale du véhicule automobile (noté $v_x$), la vitesse étant par exemple estimée à partir de la mesure des vitesses de rotation des roues, ces vitesses pouvant être celles utilisées par le système ABS.

Le bloc 2 représente l'ensemble de ces signaux.

En sortie, le calculateur délivre un signal de pilotage du dispositif de direction 7 tenant compte d'une démultiplication déterminée dans le calculateur.

Le calculateur 1 comprend un moyen 3 de calcul de la démultiplication du système de direction. Comme expliqué précédemment, par démultiplication, on entend, dans ce mode de réalisation, le rapport de l'angle du volant de direction sur l'angle de braquage des roues correspondant. La contribution statique de la démultiplication est supposée définie en régime stabilisé du point de vue du système de direction.

Contrairement à ce qui se passe dans un système de direction passive, où la valeur de cette démultiplication dépend des éléments mécaniques et peut ne pas être tout à fait constante sur la plage de variation de l'angle volant, pour un système de direction active, la démultiplication est variable et dépend d'un certain nombre de paramètres du véhicule. Le plus souvent, et c'est l'exemple retenu dans ce mode de réalisation, cette démultiplication est fonction de la vitesse longitudinale du véhicule et également de l'angle du volant. Afin de distinguer la contribution due à des éléments passifs et actifs sur la variation de la démultiplication $n_a(v_x, \alpha_v)$, on définit la démultiplication active selon la relation suivante :

$$n_a(v_x, \alpha_v) = \frac{n}{TGS(v_x, \alpha_v)}$$

avec :

$$n = \frac{\alpha_v}{\alpha_{rouesmoyen}}$$ gitudinale du véhicule c'est-à-dire la démultiplication en l'absence de contribution active,

$\alpha_v$ : la position angulaire du volant,

$\alpha_{rouesmoyen}$ : l'angle de braquage des roues, et

$TGS(v_x, \alpha_v)$ : un coefficient valant 1 pour un système de direction passive, supérieur à 1 pour rendre le système de direction moins direct qu'un système de direction passive et inférieur à 1 pour rendre le système de direction plus direct qu'un système de direction passive.

En entrée de ces moyens de calcul, on fournit un signal de position angulaire du volant et un signal de vitesse longitudinale du véhicule. En sortie, on obtient la démultiplication liant la position angulaire du volant à l'angle de braquage des roues. Notamment, on obtient en sortie la valeur de la variable TGS($v_x,\alpha_v$). Ces moyens de calcul peuvent notamment comprendre des programmes logiciels.

Le calculateur comprend aussi un moyen 4 de détection d'une situation de freinage appuyé du véhicule automobile. Par freinage appuyé, on entend freinage intense. Ce moyen de détection est attaqué par un signal d'accélération longitudinale du véhicule automobile. Dans ce moyen de détection, l'information d'accélération longitudinale $\gamma_L$ est comparée à un seuil min$\gamma_L$, ce dernier pouvant être fonction de la vitesse longitudinale du véhicule. L'accélération longitudinale est négative lors d'une décélération (freinage du véhicule) tandis qu'elle est positive en phase de prise de vitesse. Par conséquent, le seuil min$\gamma_L$ est négatif et est défini par un metteur au point.

Si l'accélération du véhicule automobile est supérieure à ce seuil min$\gamma_L$, c'est que le véhicule accélère, ne change pas de vitesse, ou décélère faiblement et que, par conséquent, on ne se trouve pas dans une situation de freinage appuyé. La sortie du moyen de détection est alors mise à l'état logique bas (0).

Au contraire, si l'accélération du véhicule automobile devient inférieure à ce seuil min$\gamma_L$, c'est qu'on se trouve dans une situation de freinage appuyé. La sortie du moyen de détection est alors mise à l'état logique haut (1).

Par exemple, min$\gamma_L$ est égal à - 3 m.s$^{-2}$. Ce seuil est réglé par le metteur au point en fonction notamment du véhicule et de la démultiplication retenue.

Dans ce mode de réalisation, il n'est pas requis que le conducteur applique un angle de braquage minimum pour que la sortie du moyen de détection passe à l'état logique haut. En effet, l'application de cette stratégie hors virage permet de ne pas faire varier trop vite la démultiplication qui devrait être engendrée par la baisse rapide de la vitesse afin de ne pas surprendre le conducteur si celui-ci doit effectuer dans l'urgence une manoeuvre d'évitement.

Dans un autre mode de réalisation, on peut en outre prendre en compte un braquage minimum de l'angle du volant (supérieur à un seuil pouvant par exemple dépendre de la vitesse du véhicule) pour valider la détection d'un freinage appuyé uniquement en virage. Dans ce cas, la démultiplication chute naturellement avec la vitesse du véhicule selon la loi définie par les moyens 3 de calcul de démultiplication lorsque le véhicule est supposé évoluer en ligne droite.

La sortie du moyen de détection d'une situation de freinage appuyé peut repasser à l'état logique bas dès que l'accélération du véhicule devient supérieure au seuil min$\gamma_L$. Alternativement, le moyen peut présenter un effet d'hystérésis, c'est-à-dire que sa sortie ne repasse à l'état logique bas que lorsque l'accélération du véhicule devient supérieure à un autre seuil, cet autre seuil étant supérieur au seuil min$\gamma_L$. Ainsi, le moyen de détection d'une situation de freinage appuyé considère qu'on se trouve dans une situation de freinage appuyé tant que l'accélération du véhicule n'est pas supérieure à cet autre seuil.

Dans un autre mode de réalisation, si on fournit au calculateur un signal d'effort et/ou de vitesse d'actionnement d'un organe de commande de freinage, on peut utiliser ce critère ou ces critères pour détecter une situation de freinage appuyé.

Le calculateur comprend aussi un moyen de supervision 5 permettant de définir plusieurs états ou modes de fonctionnement du système de direction ou plusieurs modes de fonctionnement du procédé de fonctionnement du système de direction et de régir le fonctionnement du système de direction selon ces modes. Ces modes de fonctionnement se distinguent par des différences de moyens actifs dans le calculateur et par des signaux de sortie du calculateur différents pour piloter le dispositif de direction.

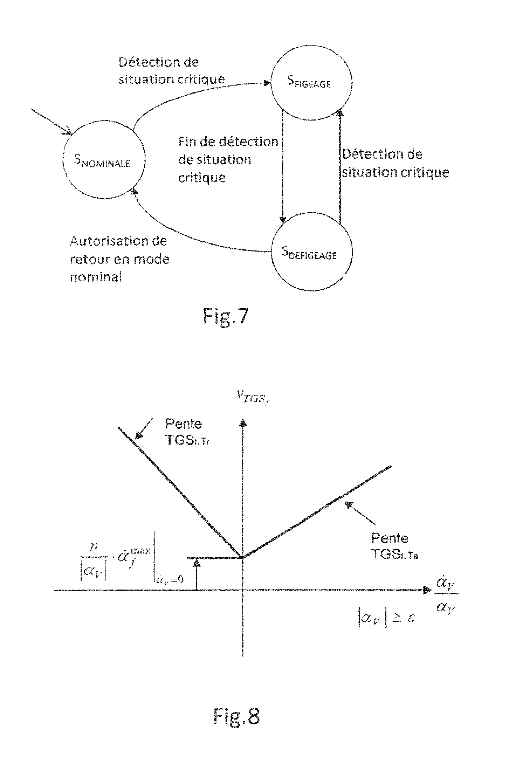

Comme représenté à la figure 7, le procédé de fonctionnement comprend trois modes de fonctionnement :

- S$_{NOMINALE}$ : c'est le mode de fonctionnement nominal activé hors détection d'une situation de freinage appuyé,
- S$_{FIGEAGE}$ : c'est le mode de fonctionnement activé lorsqu'une situation de freinage appuyé est détectée,
- S$_{DEFIGEAGE}$ : c'est un mode de fonctionnement temporaire ou transitoire entre le mode de fonctionnement S$_{FIGEAGE}$ et le mode de fonctionnement S$_{NOMINALE}$.

Le système de direction se trouvant initialement dans le mode de fonctionnement S$_{NOMINALE}$, lors d'une détection d'une situation de freinage appuyé (la sortie du moyen de détection passant à l'état haut), le système de direction bascule dans le mode de fonctionnement S$_{FIGEAGE}$.

Le mode de fonctionnement S$_{FIGEAGE}$ est caractérisé par le fait que pour au moins une plage de vitesses prédéfinie, quel que soit le sens de braquage et tout paramètre égal par ailleurs, une variation de la position du volant entraîne, dans ce mode de fonctionnement, une variation de position de braquage des roues strictement inférieure à celle entraînée dans le mode de fonctionnement S$_{NOMINALE}$ par une même variation de la position du volant.

Pour ce faire, de préférence, la démultiplication est figée, c'est-à-dire volontairement maintenue constante, par exemple égale à la dernière valeur de démultiplication appliquée dans le mode de fonctionnement précédent S$_{NOMINALE}$. Toutes ces modifications de valeurs de démultiplication sont possibles en modifiant la valeur du coefficient TGS grâce à un moyen de modification décrit plus bas.

A la fin d'une phase de fonctionnement du système de direction selon le mode de fonctionnement $S_{FIGEAGE}$, une première valeur de démultiplication appliquée peut être très différente d'une deuxième valeur de démultiplication qui serait appliquée dans les mêmes conditions de roulage du véhicule si le système de direction fonctionnait selon son mode nominal $S_{NOMINALE}$. Il s'avère donc important de ne pas basculer brutalement du mode de fonctionnement $S_{FIGEAGE}$ au mode de fonctionnement $S_{NOMINALE}$, ce qui risquerait de provoquer un brusque braquage des roues, de nature à surprendre le conducteur. Pour ce faire, on met en oeuvre le mode de fonctionnement $S_{DEFIGEAGE}$ pendant lequel la démultiplication est progressivement modifiée selon un certain nombre de critères détaillés plus bas de façon à assurer une transition douce entre les première et deuxième valeurs de démultiplication évoquées plus haut.

Dès que les valeurs de démultiplication dans le mode de fonctionnement $S_{DEFIGEAGE}$ et dans le mode de fonctionnement $S_{NOMINALE}$ sont suffisamment proches l'une de l'autre, le système de direction bascule dans le mode de fonctionnement $S_{NOMINALE}$. Un test de comparaison des valeurs de démultiplication (ou des valeurs des variables TGS définissant les démultiplications) dans les deux modes peut être mis en oeuvre.

Si une phase de freinage appuyé est détecté pendant un fonctionnement selon le mode de fonctionnement $S_{DEFIGEAGE}$, le système bascule de nouveau dans le mode de fonctionnement $S_{FIGEAGE}$.

Le moyen de supervision 5 transmet une information sur le mode de fonctionnement actif à un moyen 6 de modification de la démultiplication calculée dans les moyens 3 de calcul.

Ce moyen de supervision peut notamment comprendre des programmes logiciels.

Le calculateur comprend aussi le moyen 6 de modification de la démultiplication évoqué ci-dessus. Ce moyen permet de modifier la démultiplication par rapport à ce qu'elle serait dans le mode de fonctionnement $S_{NOMINALE}$ lorsque le système de direction fonctionne selon le mode de fonctionnement $S_{FIGEAGE}$ ou selon le mode de fonctionnement $S_{DEFIGEAGE}$. Le moyen de modification peut notamment agir en modifiant la valeur du paramètre TGS établi en sortie des moyens de calcul 3. Dans ce moyen de modification, on effectue des étapes itératives de calcul de modification de la démultiplication. Ces étapes de calcul sont par exemple effectuées selon une période Te. La valeur des variables au $k^e$ pas d'échantillonnage est repérée par l'indice k.

Lorsque le système de direction fonctionne selon le mode de fonctionnement $S_{NOMINALE}$, le moyen de modification fournit à sa sortie une variable TGSf liée à la variable TGS par l'équation :

$$ TGSf_k = TGS_k(v_x, \alpha_v) $$

Autrement dit, le moyen de modification de la démultiplication ne modifie pas les variables obtenues en sortie des moyens 3 de calcul de la démultiplication.

Lorsque le système de direction fonctionne selon le mode de fonctionnement $S_{FIGEAGE}$, le moyen de modification fournit à sa sortie une variable TGSf liée à la variable TGS par l'équation :

$$ \forall k \geq k_0, TGSf_k = TGSf_{k_0} $$

en supposant que la transition du mode de fonctionnement $S_{NOMINALE}$ au mode de fonctionnement $S_{FIGEAGE}$ ait lieu juste après le $k_0^e$ pas d'échantillonage.

Autrement dit, le moyen de modification modifie la démultiplication de manière à ce qu'elle reste contante dans le mode de fonctionnement $S_{FIGEAGE}$ et égale à la dernière valeur qu'elle prenait dans le mode de fonctionnement $S_{NOMINALE}$ précédent ou dans le mode de fonctionnement $S_{DEFIGEAGE}$ précédent.

Comme déjà vu précédemment, dans une variante de réalisation, la démultiplication peut évoluer dans le mode de fonctionnement $S_{FIGEAGE}$ sans toutefois évoluer plus qu'elle n'évoluerait dans le mode de fonctionnement $S_{NOMINALE}$.

Lorsque le système de direction fonctionne selon le mode de fonctionnement $S_{DEFIGEAGE}$, le moyen de modification fournit à sa sortie une variable TGSf dont les valeurs évoluent progressivement de manière à atteindre la valeur TGS fournie en sortie des moyens de calcul 3.

Afin de procéder à ce rattrapage, la solution proposée par l'invention consiste à effectuer un rattrapage cohérent avec les actions de braquage demandées par le conducteur. Si le conducteur tend à ajouter ou retirer de l'angle au volant, synonyme d'un désir de braquer les roues en conséquence, l'action de rattrapage est tempérée afin d'assurer un braquage des roues dans le même sens que le volant (ce qui limite la vitesse de rattrapage de la démultiplication).

Tout d'abord, si l'angle du volant est inférieur à un seuil ε en valeur absolue

$$|\alpha_V| < \varepsilon \,,$$

l'évolution de la démultiplication se fait à une vitesse $v_{TGSf}(t) = v_{TGSf_0}$ paramétrée directement par un metteur au point. Ce seuil $\varepsilon$ peut être fonction notamment de la démultiplication courante appliquée.

Si au contraire, l'angle du volant est supérieur ou égal en valeur absolue au seuil $\varepsilon$, $|\alpha_v| \geq \varepsilon$ alors le rattrapage est effectué à une vitesse définie par la relation (1) en supposant que l'action de rattrapage de la démultiplication nécessite de faire augmenter la valeur courante de TGSf (ce qui équivaut à une situation où TGS>TGSf, à l'instant d'entrée dans le mode de fonctionnement $S_{DEFIGEAGE}$) ce qui est généralement le cas après une action de freinage.

$$v_{TGSf} = TGSf \times \tau \times \left| \frac{\dot{\alpha}_V}{\alpha_V} \right| \qquad (1)$$

avec T un paramètre de réglage compris entre 0 et 1 exclu permettant de régler la progressivité du rattrapage de la démultiplication. Plus il est proche de 1, plus le rattrapage est privilégié et inversement.

La vitesse angulaire de braquage des roues est alors donnée par la relation (2) :

$$\dot{\alpha}_{rouesmoyen} = \frac{TGSf}{n} \times \dot{\alpha}_V \times (\tau \times signe(\alpha_V \times \dot{\alpha}_V) + 1) \qquad (2)$$

avec :

$\dot{\alpha}_v$ : la vitesse angulaire du volant,
$\dot{\alpha}_{rouesmoyen}$ : la vitesse de braquage des roues.

On écrit l'équation (1) en instant d'échantillonnage, en approximant les dérivées par exemple par la méthode d'Euler, c'est-à-dire

$$v_{TGSf_k} = \frac{TGSf_k - TGSf_{k-1}}{Te} \text{ et } \dot{\alpha}_{V_k} = \frac{\alpha_{V_k} - \alpha_{V_{k-1}}}{Te} \qquad (3)$$

avec

$$v_{TGSf_k} = TGSf_{k-1} \times \tau \times \left| \frac{\dot{\alpha}_{V_k}}{\alpha_{V_k}} \right|$$

d'où

$$TGSf_k = TGSf_{k-1} \times \left( 1 + \tau \times \left| \frac{\alpha_{V_k} - \alpha_{V_{k-1}}}{\alpha_{V_k}} \right| \right) \qquad (4)$$

D'après l'équation (4), pendant le mode de fonctionnement $S_{DEFIGEAGE}$, la variable TGSf a bien tendance à augmenter ce qui permet de rattraper la démultiplication courante.

D'après l'équation (1), qui tient compte de la contrainte de braquer les roues dans le même sens que le volant pendant le rattrapage, la démultiplication est maintenue constante tant que le conducteur ne bouge pas son volant.

Dans une première variante, il peut être décidé de ne pas rattraper la démultiplication de la même façon lorsque le conducteur ajoute ou retire

de l'angle à son volant. Dans ce cas, le paramètre $T \in [0,1[$ prend des

valeurs différentes, respectivement $T_a \in [0,1[$ et $T_r \in [0,1[$ selon le signe

positif ou négatif du produit $\alpha_V \times \dot{\alpha}_V$. En effet, la baisse de démultiplication favorise déjà le braquage des roues lorsque le conducteur ajoute de l'angle à son volant tandis qu'elle défavorise le débraquage des roues lorsque le conducteur réduit l'angle à son volant.

Dans une deuxième variante, l'étape de rattrapage dans le mode de fonctionnement $S_{DEFIGEAGE}$ consiste à modifier l'équation (1) afin d'effectuer un rattrapage de démultiplication même si le conducteur ne bouge pas son volant.

On définit $\left.\dot{\alpha}_f^{max}\right|_{\dot{\alpha}_V=0}$ la vitesse maximale de braquage des roues autorisée à vitesse d'angle de volant nul. Ce paramètre réglé par un metteur au point peut dépendre de grandeurs du véhicule telles que la vitesse longitudinale. Ainsi, la vitesse de rattrapage de la démultiplication est paramétrée par ce coefficient selon l'équation (5) :

$$v_{TGSf} = TGSf \times \tau \times \left|\frac{\dot{\alpha}_V}{\alpha_V}\right| + \frac{n}{|\alpha_V|} \times \left.\dot{\alpha}_f^{max}\right|_{\dot{\alpha}_V=0} \qquad (5)$$

soit en échantillonné à la période Te, au $k^e$ instant d'échantillonnage :

$$TGSf_k = TGSf_{k-1} \times \left(1 + \tau \times \left|\frac{\alpha_{V_k} - \alpha_{V_{k-1}}}{\alpha_{V_k}}\right|\right) + \frac{n}{|\alpha_{V_k}|} \times Te \times \left.\dot{\alpha}_f^{max}\right|_{\dot{\alpha}_V=0} \qquad (6)$$

Cette variante est illustrée par la figure 8.

Sur des vitesses de braquage très faibles, cela a pour conséquence de ne plus vérifier tout à fait la relation de contrainte imposée précédemment (à savoir braquage des roues dans le même sens que le volant), lorsque le conducteur réduit son angle volant. Celle-ci étant tout de même vérifiée sur des braquages plus importants. Le seuil de vitesse de braquage du volant qui délimite les deux comportements dépend notamment de la valeur de $\left.\dot{\alpha}_f^{max}\right|_{\dot{\alpha}_V=0}$ comme le montre l'équation (7).

$$\dot{\alpha}_{rouesmoyen} = \frac{TGSf}{n} \times \dot{\alpha}_V \times (\tau \times signe(\alpha_V \times \dot{\alpha}_V) + 1) + signe(\alpha_V) \times \left.\dot{\alpha}_f^{max}\right|_{\dot{\alpha}_V=0} \qquad (7)$$

Cette variante peut être en outre combinée à la variante précédente.

De préférence, on assure que la variation de la démultiplication permet de conserver une cohérence entre l'action du conducteur et l'action de braquage des roues directrices. De cette façon, un ajout d'angle au niveau du volant entraîne un ajout d'angle de braquage des roues et un retrait d'angle au niveau du volant entraîne un retrait d'angle de braquage des roues.

L'information de démultiplication variable en sortie du moyen de modification 6 (et en sortie du calculateur) est fournie au dispositif 7 de direction active afin d'être utilisée par l'actionneur de braquage des roues.

Dans le cas d'un système de direction active à l'arrière, le fonctionnement décrit ci-dessus peut également être appliqué en considérant la démultiplication équivalente que permet de créer le système de braquage des roues arrière. La démultiplication équivalente vient du fait qu'en braquant les roues arrière, il est requis de braquer moins les roues avant (et donc le volant) pour suivre une même trajectoire. La relation liant l'angle de braquage des roues avant par rapport au volant est donné par la relation $n = \dfrac{\alpha_v}{\alpha_{rouesmoyen}}$ puisque la direction est active à l'arrière et non à l'avant.

Le braquage des roues arrière est calculé tel qu'en stabilisé, la vitesse de lacet produite par un angle volant donné soit équivalente à celle produite grâce à la présence d'une direction active à l'avant via le paramètre TGS($v_x$, $\alpha_v$). L'angle de braquage des roues arrière est dans ce cas donné par la relation suivante :

$$\alpha_{ar} = (1 - TGS(v_x, \alpha_V)) \times \frac{\alpha_V}{n} \qquad (8)$$

Les moyens présentés dans le cas d'une direction active à l'avant sont ainsi les mêmes dans le cas d'une direction active à l'arrière sauf en ce qui concerne le moyen 6 de modification de la démultiplication.

En effet, dans ce cas, lorsque le système de direction fonctionne selon mode de fonctionnement $S_{DEFIGEAGE}$, afin de garantir un rattrapage de de valeur de démultiplication cohérent avec les actions du conducteur, il est nécessaire de respecter la relation suivante pour la vitesse de rattrapage.

On suppose ici, qu'il est nécessaire de faire augmenter la valeur du paramètre TGSf précédemment figée afin de rattraper la démultiplication de base donnée par TGS($v_x$, $\alpha_v$) ce qui se traduit par une vitesse de rattrapage positive.

$$\dot{\alpha}_{ar} = \left[1 - TGS(v_x, \alpha_V)\right] \times \frac{\dot{\alpha}_V}{n} - v_{TGS} \times \frac{\alpha_V}{n} \qquad (9)$$

Si le conducteur tend à ajouter ou retirer de l'angle au volant, synonyme d'un désir de réduire ou d'augmenter le rayon de courbure de sa trajectoire, l'action de rattrapage est tempérée afin d'assurer la réalisation de la volonté conducteur (ce qui limite la vitesse de rattrapage de la démultiplication).

Tout d'abord, si l'angle du volant est inférieur à un seuil $\varepsilon$ en valeur absolue

$$\left|\alpha_V\right| < \varepsilon \, ,$$

l'évolution de la démultiplication se fait à une vitesse
$v_{TGSf}(t) = v_{TGSf_0}$ paramétrée directement par un metteur au point. Ce seuil $\varepsilon$
peut être fonction notamment de la démultiplication courante appliquée.

Si au contraire, l'angle du volant est supérieur ou égal en valeur absolue au seuil $\varepsilon$,
$|\alpha_V| \geq \varepsilon$ alors le rattrapage est effectué à une vitesse définie par la relation (10) (similaire à la relation (1) utilisée pour une direction active à l'avant).

$$v_{TGSf} = TGSf \times \tau \times \left|\frac{\dot{\alpha}_V}{\alpha_V}\right| \qquad (10)$$

avec T un paramètre de réglage compris entre 0 et 1 exclu permettant de régler la progressivité du rattrapage de la démultiplication. Plus il est proche de 1, plus le rattrapage est privilégié et inversement.

La vitesse de braquage des roues arrière est alors donnée par la relation (11) :

$$\dot{\alpha}_{ar} = \frac{\dot{\alpha}_V}{n} - \frac{TGSf}{n} \times \dot{\alpha}_V \times (1 + \tau \times signe(\alpha_V \times \dot{\alpha}_V)) \qquad (11)$$

avec :

$\dot{\alpha}_{ar}$ : la vitesse de braquage des roues arrière.

Il est possible d'adopter le même raisonnement dans le cas où la direction doit devenir moins directe.

Les deux variantes présentées dans le cas d'une direction active à l'avant sont également applicables.

L'invention peut évidemment aussi être appliquée à un système de direction active à l'avant et à l'arrière pour participer à la réalisation d'une démultiplication variable.

Le système de direction selon l'invention et le procédé de fonctionnement de ce système sont décrits appliqués à un véhicule automobile. Néanmoins, ils peuvent être appliqués, dans le domaine du jeu et de la simulation, à un véhicule automobile virtuel.

**Revendications**

1. Procédé de fonctionnement d'un système (10) de direction d'un véhicule automobile comprenant un organe de commande de direction pour braquer des roues directrices du véhicule automobile dans un premier sens ou dans un deuxième sens de braquage, le procédé comprenant :

   - un premier mode de fonctionnement ($S_{NOMINALE}$) dans lequel on applique une première démultiplication entre la position de braquage des roues directrices du véhicule automobile et la position de l'organe de commande de direction, la première démultiplication étant variable en fonction de la vitesse ($V_x$) du véhicule automobile, et
   - dans une phase de freinage du véhicule automobile, un deuxième mode de fonctionnement ($S_{FIGEAGE}$) dans lequel on applique une deuxième démultiplication entre la position de braquage des roues directrices du véhicule automobile et la position de l'organe de commande de direction,

   **caractérisé en ce que,** pour au moins un intervalle de vitesses prédéfini, quel que soit le sens de braquage et tout paramètre égal par ailleurs, une variation de position de l'organe de commande de direction entraîne, dans le deuxième mode de fonctionnement, une variation de position de braquage des roues strictement inférieure à celle entraînée dans le premier mode de fonctionnement par une même variation de position de l'organe de commande de direction.

2. Procédé de fonctionnement selon la revendication 1, **caractérisé en ce que** la deuxième démultiplication est indépendante de la vitesse du véhicule automobile.

3. Procédé de fonctionnement selon la revendication 1 ou 2, **caractérisé en ce que** lors d'une transition du premier mode de fonctionnement au deuxième mode de fonctionnement, la dernière valeur de la première démultiplication est égale à la première valeur de la deuxième démultiplication.

4. Procédé de fonctionnement selon l'une des revendications précédentes, **caractérisé en ce qu'**il bascule dans le deuxième mode de fonctionnement dès franchissement à la baisse d'un premier seuil d'accélération ($min\gamma_L$).

5. Procédé de fonctionnement selon l'une des revendications précédentes, **caractérisé en ce qu'**il comprend un troisième mode de fonctionnement ($S_{DEFIGEAGE}$) assurant une transition entre le deuxième mode de fonctionnement et le premier mode de fonctionnement et dans lequel on applique une troisième démultiplication entre la position de braquage des roues directrices du véhicule automobile et la position de l'organe de commande de direction.

6. Procédé de fonctionnement selon la revendication 5, **caractérisé en ce que,** dans le troisième mode de fonctionnement, lorsque la valeur de position de l'organe de commande est inférieure à un deuxième seuil ($\varepsilon$), l'évolution de la valeur de la troisième démultiplication est fixée par un paramètre de réglage constant ou fonction de la valeur de la troisième démultiplication.

7. Procédé de fonctionnement selon la revendication 5 ou 6, **caractérisé en ce que,** dans le troisième mode de fonctionnement, lorsque la valeur de position de l'organe de commande est supérieure ou égale à un deuxième seuil ($\varepsilon$), l'évolution de la valeur de la troisième démultiplication est dépendante des actions exercées par le conducteur sur l'organe de commande de direction.

8. Procédé de fonctionnement selon la revendication 7, **caractérisé en ce que** la troisième démultiplication n'est pas modifiée sans modification de la position de l'organe de commande, lorsque la vitesse du véhicule est supérieure à un troisième seuil.

**9.** Procédé de fonctionnement selon la revendication 7, **caractérisé en ce qu'**en cas de maintien de la position de l'organe de commande de direction la troisième démultiplication est modifiée de sorte à ce que la vitesse de braquage des roues ne dépasse pas un quatrième seuil.

**10.** Procédé de fonctionnement selon la revendication 9, **caractérisé en ce que** le quatrième seuil est fonction de la vitesse du véhicule automobile.

**11.** Procédé de fonctionnement selon l'une des revendications 7 à 10, **caractérisé en ce qu'**il passe du deuxième mode de fonctionnement au troisième mode de fonctionnement dès franchissement à la hausse d'un cinquième seuil d'accélération.

**12.** Support (1) de données comprenant des moyens logiciels de mise en oeuvre du procédé de fonctionnement selon l'une des revendications précédentes.

**13.** Système de direction d'un véhicule automobile comprenant un organe de commande de direction pour braquer des roues directrices du véhicule automobile dans un premier sens ou dans un deuxième sens de braquage, **caractérisé en ce qu'**il comprend des moyens matériels (1, 3, 4, 5, 6) et/ou logiciels de mise en oeuvre du procédé de fonctionnement selon l'une des revendications précédentes.

**14.** Système de direction selon la revendication 13, **caractérisé en ce que** les moyens matériels et/ou logiciels de mise en oeuvre du procédé de fonctionnement comprennent des moyens (3) de calcul de la démultiplication du système de direction et un moyen (4) de détection d'une phase de freinage du véhicule activant un moyen de modification de la démultiplication calculée au niveau des moyens (3) de calcul de la démultiplication du système de direction.

**15.** Véhicule automobile comprenant des roues avant et/ou des roues arrière directrices actionnées par un système de direction selon l'une des revendications 13 à 14.

Rapport de démultiplication

$$n = \frac{\alpha_{volant}}{\alpha_{roues\_avant\_moyen}}$$

Stabilité

Maniabilité

Vitesse du véhicule $V$ (m.s$^{-1}$)

Fig.1

Rapport de démultiplication

$$n = \frac{\alpha_{volant}}{\alpha_{roues\_avant\_moyen}}$$

Courbe statique

Illustration d'une zone
d'évolution possible de la
démultiplication avec
contribution dynamique

Vitesse du véhicule $V$ (m.s$^{-1}$)

Fig.2

Rapport de démultiplication

Fig.3

Fig.4

Obstacle sur la voie

······ Avec compensation + variation $G_{base}$

━━━ Avec démultiplication constante (classique)

## Fig.5

Accélération
longitudinale

Signaux
d'entrée

Détection de
situation de freinage
appuyé en virage

Superviseur

$S_i$

$TGS_f(v_x, \alpha_v, S_i)$

$TGS(v_x, \alpha_v)$

Calcul de la
démultiplication
variable de direction
nominale

Figeage/Défigeage
progressif

Système de
direction
active

Angle braquage
volant

Vitesse
longitudinale

Calculateur de direction

## Fig.6

Détection de
situation critique

$S_{FIGEAGE}$

$S_{NOMINALE}$

Fin de détection
de situation
critique

Détection de
situation critique

Autorisation de
retour en mode
nominal

$S_{DEFIGEAGE}$

Fig.7

$v_{TGS_f}$

Pente
TGS$_{f.Tr}$

Pente
TGS$_{f.Ta}$

$\left. \dfrac{n}{\left| \alpha_V \right|} \cdot \dot{\alpha}_f^{\max} \right|_{\dot{\alpha}_V = 0}$

$\dfrac{\dot{\alpha}_V}{\alpha_V}$

$\left| \alpha_V \right| \geq \varepsilon$

Fig.8

Europäisches Patentamt
European Patent Office
Office européen des brevets

**RAPPORT DE RECHERCHE EUROPEENNE**

Numéro de la demande

EP 09 30 5334

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 862 594 A (BOSCH) 27 mai 2005 (2005-05-27) * le document en entier * ----- | 1-5, 12-15 | INV. B62D5/00 B62D6/00 |
| X | EP 1 371 541 A (RENAULT) 17 décembre 2003 (2003-12-17) * alinéas [0014], [0034], [0035], [0041] - [0044]; figures * ----- | 1-5, 12-15 | ADD. B62D103/00 |
| X | US 5 884 724 A (BOHNER ET AL.) 23 mars 1999 (1999-03-23) * colonne 4, ligne 39 - ligne 50 * ----- | 1-4, 12-15 | |
| D,A | US 6 302 441 B1 (KAWAMURO ET AL.) 16 octobre 2001 (2001-10-16) ----- | | |
| A | EP 1 700 773 A (FORD) 13 septembre 2006 (2006-09-13) ----- | | |
| A | EP 1 568 576 A (ZF LENKSYSTEME) 31 août 2005 (2005-08-31) ----- | | |

DOMAINES TECHNIQUES RECHERCHES (IPC)

B62D

Le présent rapport a été établi pour toutes les revendications

| Lieu de la recherche | Date d'achèvement de la recherche | Examinateur |
|---|---|---|
| Berlin | 16 juin 2009 | Krieger, Philippe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 30 5334

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-06-2009

| Document brevet cité au rapport de recherche | | Date de publication | Membre(s) de la famille de brevet(s) | | Date de publication |
|---|---|---|---|---|---|
| FR 2862594 | A | 27-05-2005 | DE<br>JP | 10354663 A1<br>2005153867 A | 16-06-2005<br>16-06-2005 |
| EP 1371541 | A | 17-12-2003 | DE<br>FR | 60308756 T2<br>2840870 A1 | 16-08-2007<br>19-12-2003 |
| US 5884724 | A | 23-03-1999 | DE<br>GB<br>IT | 19546943 C1<br>2308106 A<br>RM960819 A1 | 19-06-1997<br>18-06-1997<br>29-05-1998 |
| US 6302441 | B1 | 16-10-2001 | DE<br>JP | 19920718 A1<br>11334627 A | 31-05-2000<br>07-12-1999 |
| EP 1700773 | A | 13-09-2006 | AUCUN | | |
| EP 1568576 | A | 31-08-2005 | DE 102004009815 A1 | | 15-09-2005 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0317390 A1
- US 2005273235 A
- US 20050043874 A
- US 6302441 B